# EUROPÄISCHE PATENTANMELDUNG

(11) **EP 2 887 280 A1**
(43) Veröffentlichungstag der Anmeldung: **24.06.2015**
(21) Anmeldenummer: 14196891.7
(22) Anmeldetag: 09.12.2014
(51) Int. Cl.: G06Q 10/00

(54) **Verfahren zur Instandhaltung von Betriebsmitteln großtechnischer Anlagen oder Fabrikationsstätten**

(30) Priorität: 17.12.2013 DE 102013226186
(71) Anmelder: Evonik Industries AG, 45128 Essen (DE)
(72) Erfinder: Schlüssel, Dirk, 47807 Krefeld (DE); Albin, Detlef, 47441 Moers (DE)

(57) **Zusammenfassung**

Die Erfindung macht es sich unter anderem zur Aufgabe, ein Verfahren zur Verfügung zu stellen, welches die technische Instandhaltung einer großtechnischen Anlage oder einer Fabrikationsstätte vereinfacht. Dies wird erreicht durch ein computer-implementiertes Instandhaltungsverfahren.

## Beschreibung

Die Erfindung betrifft ein Verfahren zur Instandhaltung von Betriebsmitteln großtechnischer Anlagen oder Fabrikationsstätten, sowie ein Computersystem nebst zugehörigen Programmen zur Durchführung des Verfahrens.

Betreiber großtechnischer Anlagen bzw. Fabrikationsstätten, die diese Anlagen bzw. Fabrikationsstätten für die Zwecke des eigenen Unternehmens oder im Auftrag für Dritte betreiben, haben dafür Sorge zu tragen, dass verwendete Betriebsmittel regelmäßig inspiziert und gewartet sowie bei Bedarf Reparaturmaßnahmen eingeleitet werden. Je nach Art der Betriebsmittel kann dies veranlasst sein, um gesetzliche Vorgaben einzuhalten oder um Anforderungen von Zertifizierungsverfahren gerecht zu werden, die je nach Art der Betriebsmittel unterschiedlich streng sein können und deren Einhaltung gegebenenfalls gegenüber Behörden oder Prüforganisationen anhand compliance-sicherer Dokumentation nachzuweisen ist. In diesem Zusammenhang ist eine einheitliche, sicher archivierte und jederzeit abrufbare Dokumentation wünschenswert. Außerdem soll durch die regelmäßige Inspektion, Wartung, Prüfung und Reparatur der Betriebsmittel gewährleistet werden, dass die Mitarbeiter stets auf funktionierende und aus Arbeitssicherheitsaspekten heraus unbedenkliche Betriebsmittel zurückgreifen können, um einen ungestörten Betriebsablauf zu gewährleisten. Auch kann durch regelmäßige und rechtzeitige Inspektion und Wartung von Betriebsmitteln etwaiges Gefahrenpotential, das von sicherheitsrelevanten Betriebsmitteln für Mitarbeiter oder Umwelt ausgehen kann, effektiv minimiert bzw. ausgeschlossen werden. Schließlich dient die regelmäßige Betriebsmittelkontrolle auch dazu, drohende Ausfälle von Betriebsmitteln rechtzeitig zu erkennen und Schaden, der durch einen Ausfall für das Unternehmen entstehen könnte, präventiv zu vermeiden.

Beim Betrieb großtechnischer Anlagen, beispielsweise einer chemischen Produktionsanlage, werden vielfältigste Betriebsmittel eingesetzt. Diese umfassen Komponenten der eigentlichen Produktionsanlage selbst (Verrohrung, Ventile, Steuerungen, etc.), für den Betrieb notwendige Hilfsmittel (Fahrzeuge, Hebebühnen, Leitern, Werkzeuge, Notstromaggregate, etc.), Gebäudeausstattung (Fahrstühle, Beleuchtung, etc.), Arbeitssicherheitsequipment (Notduschen, Feuerlöscher, Erste-Hilfe-Kästen, etc.) sowie Arbeitsmittel der Mitarbeiter (Telefone, Computer, etc.), wobei jeder einzelne Ausrüstungsgegenstand eine Betriebsmitteleinheit bildet. Der Begriff "Betriebsmittel" kann demnach sämtliche für den Betrieb der Produktionsanlage direkt oder indirekt notwendigen Betriebsmitteleinheiten, einschließlich Arbeitsmittel der Mitarbeiter, umfassen. Insbesondere in großen Unternehmen bestehen für die Organisation und Durchführung von Wartungs-, Inspektions-, Prüf- oder Reparaturmaßnahmen an verschiedenen Betriebsmitteleinheiten unterschiedliche Verantwortlichkeiten. Betriebsweit einheitliche Praktiken bestehen selten. Einzelne Abteilungen oder Mitarbeiter handeln meist nach eigenen Regeln. Dies führt zu einer Reihe von Nachteilen.

Im Falle behördlicher Prüfungen oder der Prüfung der Einhaltung von Zertifizierungsvorgaben befinden sich erforderliche Dokumentationsnachweise an verschiedenen Orten und auf verschiedenen Medien, was einen schnellen und effizienten Zugriff auf die Dokumentation erheblich erschwert. Das Fehlen einheitlicher Vorgaben führt dazu, dass verschiedene Mitarbeiter vergleichbare Aufgaben unterschiedlich handhaben, wodurch einzelne Vorgänge für Dritte nur schwer nachvollziehbar sind. Überdies besteht die Gefahr, dass einzelne Mitarbeiter etwaige Dokumentationsregeln eigenständig handhaben oder interpretieren, so dass die Dokumentation falsch oder in für Dritte nicht nachvollziehbarer Weise vorgenommen wird. Schlimmstenfalls ist die Dokumentation dann, wenn sie benötigt wird, nicht mehr auffindbar.

Eine die Kapazitäten einzelner Mitarbeiter berücksichtigende Arbeitsplanung ist nur schwer möglich, da keine zentral abrufbaren Informationen über fällige Maßnahmen verfügbar sind und eine gezielte Verteilung der Maßnahmen auf freie Kapazitäten daher nicht vorgenommen werden kann. Vorzunehmende Maßnahmen werden so unnötig verschleppt oder häufen sich bei einem gegebenenfalls überlasteten Mitarbeiter an.

Fehlende Einheitlichkeit bei der Beschreibung bzw. Definition von erforderlichen bzw. durchgeführten Leistungen verursacht ferner Unklarheiten über die tatsächlichen Anforderungen an verschiedene Maßnahmen bzw. über die tatsächlich durchgeführten Leistungen und damit auch über den tatsächlichen Zustand der Betriebsmittel.

Außerdem lassen sich vorgenommene Maßnahmen nur unzureichend dahingehend differenzieren, ob es sich um Inspektions-, Wartungs- oder Reparaturmaßnahmen handelt. Dies erschwert eine strukturierte Erfassung und Abrechnung von Maßnahmen sowie eine anschließende analytische Auswertung.

Schließlich besteht das Problem, dass dann, wenn der Betreiber einer großtechnischen Anlage bzw. einer Fertigungsstätte ein dienstleistender Betreiber für einen die Anlage bzw. Fabrikationsstätte nutzenden Kunden ist, sich der Kunde nur mit viel Aufwand über den Wartungsstand der Betriebsmittel bzw. den Erledigungsstand anstehender Maßnahmen informieren kann und bei der Kommunikation und Auftragsvergabe weitgehend auf herkömmliche Kommunikationswege zurückgegriffen werden muss. Ähnliches gilt auch für rein betriebsinterne Abläufe.

Aus der DE 102 35 794 A1 ist ein System und Verfahren zur zustandsorientierten Instandhaltung mindestens einer dezentralen Anlage bekannt, bei dem Zustandswerte erfasst und ausgewertet und gegebenenfalls Instandhaltungsaufträge generiert werden. Nachteilig an diesem System ist das notwendige Erfassen und Übermitteln von Zustandswerten und sowie die Erforderlichkeit vordefinierter Regeln für die Generierung von Instandhaltungsaufträgen. Insbesondere ist zu berücksichtigen, dass der Großteil der Betriebsmitteleinheiten großtechnischer Anlagen nicht über Kommunikationsmittel verfügt, über die ein zentrales Instandhaltungs-Management-System ansprechbar wäre.

Die Druckschrift EP 2 463 812 A1 offenbart ein Verfahren bzw. ein System, bei dem als Ergebnis der Erfassung und Analyse von Nutzungs- und Ausfalldaten technischer Systeme erfahrungsbasierte Warnhinweise oder Wartungsintervallpläne errechnet werden. Dieses System ermöglicht keine Überwachung und Dokumentation von Instandhaltungsmaßnahmen.

In der Offenlegungsschrift EP 2 444 922 A1 ist die Idee beschrieben, in einer Datenbank Informationen zu wartungs- und reparaturbedürftigen technischen Gegenständen aufzunehmen und den Datensätzen Bilder der jeweiligen Gegenstände zuzuordnen. Dies soll insbesondere die Verständlichkeit der Datenbankeinträge unabhängig von der die Datenbank nutzenden Personengruppe sowie die Benutzerfreundlichkeit verbessern. Auch dieses System ermöglicht keine Überwachung und Dokumentation von Instandhaltungsmaßnahmen.

In der Schrift WO 2007/059318 A2 ist ein zentralisiertes Wartungsmanagement insbesondere von kommerziellen Flugzeugflotten offenbart, bei dem während des Betriebs Betriebsdaten erfasst und in zur Wartungsplanung nutzbare Daten umgewandelt werden. Diese Daten werden anschließend von einer zentralen Stelle zur Planung von Wartungsarbeiten verwendet. Das System setzt voraus, dass Betriebsmittel eingesetzt werden, die Betriebsdaten eigenständig erfassen und weitergeben können.

Offenlegungsschrift DE 10 2011 117 803 A1 beschreibt die Modifikation von Wartungsprozeduren an Fahrzeugen anhand der Auswertung von zuvor erstellten Datensätzen, die Diagnosecodedatensätze und Arbeitscodedatensätze in Beziehung setzen. Eine Planung oder abrufbare Dokumentation von Wartungs- oder Instandhaltungsarbeiten zu bestimmten Fahrzeugen ermöglicht das Verfahren nicht.

Dokument EP 1 855 162 A1 beschreibt eine Serviceplattform zur Wartung von Maschinen, bei der ein einer bestimmten Maschine zugeordneter Rechner mit einem zentralen Verwaltungsrechner zu bestehendem Wartungs- oder Servicebedarf kommuniziert. Diese Kommunikation von Rechner zu Rechner ermöglicht keine für Dritte beeinflussbare Planung und keine einsehbare Dokumentation von Instandhaltungsmaßnahmen. Sie gewährleistet lediglich ein automatisiertes, rein reaktives Vorgehen.

Die internationale Patentanmeldung WO 2006/103296 A1 beschreibt ein System zur Planung, Dokumentation und Durchführung der Wartung von Anlagen, bei dem vorgesehen ist, die wesentlichen Informationen über alle Baugruppen der Anlagen zusammengeführt werden.

Die DE 10 2004 056 588 A1 offenbart ein automatisiertes Verfahren zur Erstellung eines Wartungsberichts einer mit einem lokalen Rechner versehenen medizinischen Einrichtung, bei dem Servicedaten der medizinischen Einrichtung und Wartungsdienstleisterdaten an ein zentrales Computersystem übermittelt und ein Wartungsbericht automatisiert erzeugt wird. Dieses Verfahren ermöglicht zwar die automatisierte Erstellung eines Wartungsberichts, nicht aber die zentrale, präventive Planung und Dokumentation anstehender Instandhaltungsmaßnahmen.

Vor diesem Hintergrund macht es sich die Erfindung zur Aufgabe, ein Verfahren zur Verfügung zu stellen, welches die technische Instandhaltung einer großtechnischen Anlage oder einer Fabrikationsstätte vereinfacht. Dabei sollen auch Betriebsmittel instand gehalten werden, die über keine Fähigkeit zur Selbstdiagnose ihres Zustandes verfügen. Darüber hinaus soll es die Organisation, Abwicklung und Dokumentation von Instandhaltungsmaßnahmen wie Prüfungen, Inspektionen, Wartungen vereinheitlichten.

Eine weitere Aufgabe der Erfindung besteht darin, ein technisches Verfahren bereit zu stellen, das einem eine großtechnische Anlage im Kundenauftrag betreibenden Dienstleister und dem Kunden die Kommunikation und Auftragsvergabe erleichtert. Insbesondere für externe Kunden ist dabei die Nutzung der elektronischen Arbeitsanforderung eine Voraussetzung um im Vieraugenprinzip Beauftragungen durchführen, oder ablehnen zu können.

Gleichermaßen ermöglicht ein elektronisches Infosystem zur Terminplanung Kunden und Dienstleister eine Ressourcenplanung von Personal und Objekten optimal zu gestalten.

Ebenfalls Aufgabe der Erfindung ist es, ein technisches Verfahren zu Verfügung zu stellen, dass einheitliche Abläufe bei der Instandhaltung großtechnischer Anlagen oder Fabrikationsstätten ermöglicht und einen leichten Zugriff auf die Instandhaltungsdokumentation gewährleistet.

Weiterhin ist es Aufgabe der Erfindung eine strukturierte Ablage der Ergebnisse der Wartungs-, Inspektions- und Prüfarbeiten in möglichst automatisierter Form sicher zu stellen.

Zusätzlich ist es eine Aufgabe der Erfindung ein valides System zur Verfügung zu stellen, um durchgefallene Wartungen, Inspektionen und Prüfungen in den Instandhaltungsmodus zu überführen und den Durchführungsstatus der Arbeiten zu dokumentieren.

All diese Aufgaben werden gelöst durch das erfindungsgegenständliche Instandhaltungsverfahren umfassend die folgenden Schritte:
a) Bereitstellen einer Datenverarbeitungsanlage, in welcher eine Vielzahl von einzelnen Betriebsmitteleinheiten umfassenden Betriebsmittel in Betriebsmitteldatensätzen erfasst sind, und aus welcher der gegenwärtige Wartungs-, Inspektions- oder Prüfzustand der erfassten Betriebsmitteleinheiten abrufbar ist,
b) Erzeugen mindestens einer eine anstehende Instandhaltungsmaßnahme betreffende digitale oder nicht-digitale Vorlage mit einer eine bestimmte Betriebsmitteleinheit eindeutig identifizierenden und von der Datenverarbeitungsanlage automatisiert auswertbaren Betriebsmittelkennung mittels der Datenverarbeitungsanlage,
c) Durchführen der Instandhaltungsmaßnahme an der durch die erzeugte Vorlage identifizierten Betriebsmitteleinheit,
d) Kennzeichnen der Vorlage mit einem das Ergebnis der durchgeführten Instandhaltungsmaßnahme charakterisierenden, von der Datenverarbeitungsanlage automatisiert auswertbaren Ergebniscode,
e) Übertragen der mit dem Ergebniscode gekennzeichneten digitalen Vorlage oder eines elektronischen Abbilds der mit dem Ergebniscode gekennzeichneten nicht-digitalen Vorlage an die Datenverarbeitungsanlage, wobei die Datenverarbeitungsanlage den abrufbaren gegenwärtigen Wartungs-, Inspektions- oder Prüfzustand anhand der Betriebsmittelkennung und dem Ergebniscode für die betroffene Betriebsmitteleinheit automatisiert anpasst.

Hiernach ist zunächst vorgesehen, dass auf einer Datenverarbeitungsanlage die eine Vielzahl von einzelnen Betriebsmitteleinheiten umfassenden Betriebsmittel in Betriebsmitteldatensätzen erfasst sind und der gegenwärtige Wartungs-, Inspektions-, oder Prüfzustand einer bestimmten Betriebsmitteleinheit abrufbar ist. Demnach setzt das Verfahren voraus, dass die Betriebsmitteleinheiten, für die das Verfahren Anwendung finden soll, in einer Datenbank zusammen mit dem jeweils aktuellen Wartungs-, Inspektions-, oder Prüfzustand aufgenommen sind. Betriebsmitteleinheit und gegenwärtiger Wartungs-, Inspektions-, oder Prüfzustand bilden, gegebenenfalls ergänzt um weitere Daten, wie z.B. der aktuellen Prüfanweisung, bzw. weiteren Detailprüfinformationen, einen Betriebsmitteldatensatz.

Im Falle einer anstehenden Inspektions-, Wartungs- oder Reparaturmaßnahme wird über die Datenverarbeitungsanlage eine die zu inspizierende, zu wartende, zu prüfende oder zu reparierende Betriebsmitteleinheit betreffende digitale oder nicht-digitale Vorlage erstellt. Diese Vorlage kann insbesondere ein elektronisches Formular oder ein Papierformular sein, auf dem der die Maßnahme durchführende Mitarbeiter die durchgeführten Tätigkeiten protokolliert. Die Vorlage weist eine bestimmte Betriebsmitteleinheit eindeutig identifizierende und von der Datenverarbeitungsanlage automatisiert auswertbare Betriebsmittelkennung auf. Dies kann ein Zahlen- und/oder Buchstabencode, ein Strichcode oder Ähnliches sein. Neben der Identifikation der jeweiligen Betriebsmitteleinheit kann die Betriebsmittelkennung auch weitere Informationen enthalten, beispielsweise eine für die durchzuführende Maßnahme relevante Datumsangabe und/oder eine Bestandteil, der die spätere Zuordnung der Vorlage zu den zugehörigen Betriebsmitteldatensätzen ermöglicht.

Im Anschluss an das Erzeugen der Vorlage führt ein zuständiger Mitarbeiter die auf der Vorlage spezifizierte Wartungs-, Inspektions-, Prüf- oder Reparaturmaßnahme für die betreffende konkrete Betriebsmitteleinheit durch. Die Vorlage definiert dabei die durchzuführende Maßnahme entsprechend von Kriterien, die vorher für diese Betriebsmittelart einheitlich festgelegt worden sind. Hierdurch wird sichergestellt, dass bei Vorhandensein einer Vielzahl gleichartiger Betriebsmitteleinheiten der gleichen Betriebsmittelart auch dann einheitlich vorgegangen wird, wenn die wiederkehrenden, gleichartigen Maßnahmen von verschiedenen Mitarbeitern und/oder zu verschiedenen Zeitpunkten vorgenommen werden.

Nach dem Durchführen der Maßnahme kennzeichnet der Mitarbeiter die Vorlage mit einem das Ergebnis der durchgeführten Maßnahme charakterisierenden, von der Datenverarbeitungsanlage automatisiert auswertbaren Ergebniscode. Beispielsweise wird der Mitarbeiter nach einer Inspektion, die keine Mängel an der inspizierten Betriebsmitteleinheit erkennen ließ, die Vorlage mit einem Ergebniscode "OK" kennzeichnen. Andernfalls, wenn zu behebende Mängel erkannt wurden, wird die Kennzeichnung der Vorlage durch einen Ergebniscode erfolgen, der erkennen lässt, dass Mängel vorhanden sind, beispielsweise "Not-OK". Weitere Ergebniscodes sind als Steuerelemente zur Kundeninformation vorgesehen um erfolgreich durchgeführte Wartungen, Inspektionen und Prüfungen automatisiert ablegen zu können, aber trotzdem dem Kunden eventuelle notwendige, nicht prüfungsrelevante Informationen auch automatisiert übermitteln zu können.

Dieser Ergebniscode muss derart ausgestaltet sein, dass er von der Datenverarbeitungsanlage automatisiert erkannt und ausgewertet werden kann. Die Vorlage weist hierzu bevorzugt ein vordefiniertes Ergebnisfeld auf, auf den der Ergebniscode aufgebracht werden kann.

Der Ergebniscode selbst kann im Falle einer nicht-digitalen Vorlage insbesondere in Form eines vorgedruckten Etiketts/Ankreuzfeldern o.ä. ausgestaltet sein, dass nach Durchführung der Maßnahme auf der Vorlage, insbesondere auf dem Ergebnisfeld, angebracht/angekreuzt wird. Neben der Kennzeichnung der Vorlage mit dem Ergebniscode quittiert der die Maßnahme durchführende Mitarbeiter die Durchführung der Maßnahme und spezifiziert auf der Vorlage etwaige erkannte Mängel und gegebenenfalls von ihm für erforderlich gehaltene Folgemaßnahmen.

Im Anschluss an die Vorlagenkennzeichnung mit dem Ergebniscode wird die mit dem Ergebniscode gekennzeichnete digitale Vorlage oder ein elektronisches Abbild der mit dem Ergebniscode gekennzeichneten nicht-digitalen Vorlage incl. eventuell vorhandener externer Anhänge an die Datenverarbeitungsanlage übertragen. Um diesen Vorgang zu vollziehen, kann der für die jeweilige Maßnahme zuständige Mitarbeiter die digitale Vorlage mit üblichen Maßnahme an die Datenverarbeitungsanlage versenden oder er erzeugt ein elektronisches Abbild der nicht-digitalen Vorlage, zum Beispiel durch Einscannen oder Abfotografieren, und überträgt dann dieses elektronische Abbild an die Datenverarbeitungsanlage. Die Übertragung der Vorlage an die Datenverarbeitungsanlage, also das Einpflegen der digitalen Vorlage bzw. des elektronischen Abbilds der nicht-digitalen Vorlage in das System bzw. die Datenverarbeitungsanlage, und die Tatsache, dass die Vorlage neben der von der Datenverarbeitungsanlage automatisiert auswertbaren Betriebsmittelkennung auch einen automatisiert auswertbaren Ergebniscode aufweist, ermöglicht der Datenverarbeitungsanlage unter Ausnutzung vorgesehener programmtechnischer Mittel die Vorlage dem jeweiligen Betriebsmitteldatensatz der konkret betroffenen Betriebsmitteleinheit eindeutig zuzuordnen. Gleichzeitig passt die Datenverarbeitungsanlage den abrufbaren gegenwärtigen Wartungszustand anhand der Betriebsmittelkennung und dem Ergebniscode für die betroffene Betriebsmitteleinheit automatisiert an.

Das vorstehend beschriebene Verfahren gewährleistet somit, dass die Betriebsmitteldatensätze nach Durchführung einer Maßnahme zeitnah und automatisiert aktualisiert werden und der aktuelle Wartungszustand der erfassten Betriebsmittel jederzeit von beliebigen Mitarbeitern oder Kunden mit Zugang zur Datenverarbeitungsanlage abgerufen werden kann. Zu der Aktualisierung des Wartungszustandes gehört auch, dass innerhalb des Systems der jeweilige Wartungsplan der Betriebsmitteleinheiten hinterlegt wird, sodass nach dem zeitlichen Ablauf vorgesehener Wartungsintervalle ein Signal zur Durchführung der erforderlichen Instandhaltungsmaßnahme ausgelöst wird. Dies erfolgt einfachstenfalls durch Erzeugen der die Maßnahme identifizierenden Vorlage.

Eine vorteilhafte Ausgestaltung des Verfahrens sieht ferner vor, dass die Datenverarbeitungsanlage die digitale Vorlage oder das Abbild der nicht-digitalen Vorlage incl. eventuell vorhandener elektronischer Abbilder von extern erzeugten Anhängen dem der Betriebsmitteleinheit zugehörigen Betriebsmitteldatensatz automatisiert zuordnet und abrufbar auf einem Speicher der Datenverarbeitungsanlage hinterlegt. Diese zentrale Erfassung der ausgefüllten Vorlagen, also insbesondere der Inspektions-, Wartungs-, Prüf- und Reparaturdokumentation, ermöglicht im Falle einer Prüfung den unmittelbaren Zugriff auf die hinterlegte Dokumentation. Ein aufwendiges "Zusammensuchen" der Dokumentation entfällt. Ferner entsteht in den Fällen wiederholter oder einander veranlassender bzw. aufeinander aufbauender Maßnahmen eine Dokumentationshistorie, anhand der sich für den Betreiber die ordnungsgemäße Durchführung von Inspektions-, Wartungs-, Prüf- oder Reparaturmaßnahmen über viele Maßnahmen und einen langen Zeitraum hinweg auf einfache Art und Weise nachweisen und nachvollziehen lässt.

Um auszuschließen, dass die ausgefüllten Vorlagen nachträglich geändert werden können, kann ferner vorgesehen sein, dass die Datenverarbeitungsanlage die digitale Vorlage oder das elektronische Abbild der nicht-digitalen Vorlage incl. eventuell vorhandener externer Anhänge änderungssicher hinterlegt. Hierdurch wird zum einen etwaigen Manipulationsversuchen vorgebeugt. Zum anderen wird so auch gesetzlichen Vorgaben genügt.

Die zu einer Vorlage durch die Datenverarbeitungsanlage bei deren Erstellung erzeugte Betriebsmittelkennung stellt bevorzugt zumindest einen Teil des Dateinamens dar, den die Datenverarbeitungsanlage nach der Ausführung der Maßnahme und der anschließenden Übertragung der digitalen Vorlage bzw. des elektronischen Abbilds der nicht-digitalen Vorlage an die Datenverarbeitungsanlage mittels hierfür vorgesehener programmtechnischer Mittel vergibt und anhand dessen die ausgefüllte, übertragene Vorlage als Inspektions-, Wartungs-, Prüf- oder Reparaturprotokoll von der Datenverarbeitungsanlage dem zugehörigen Betriebsmitteldatensatz zugeordnet wird.

Um das Verfahren weiter zu vereinfachen kann vorgesehen sein, dass die Datenverarbeitungsanlage im Anschluss an eine Maßnahme und die Übertragung der mit dem Ergebniscode versehenen Vorlage mittels programmtechnischer Mittel selbsttätig eine Nachricht erstellt, mit der der für das Betriebsmittel verantwortliche Stelle, etwa der zuständige Mitarbeiter oder Kunde, in deren Auftrag die Maßnahme durchgeführt wurde, oder sonstige interessierte Personen über das Ergebnis der Maßnahme informiert werden können. Insbesondere findet eine Benachrichtigung nur dann statt, wenn die Instandhaltungsmaßnahme negativ verlaufen ist, also das Betriebsmittel durchgefallen ist. Die verantwortliche Stelle wird so nicht mit Informationen überlastet, die keinen Handlungsbedarf erfordern.

Die erstellte Nachricht kann entweder von der Datenverarbeitungsanlage selbsttätig versendet werden oder aber lediglich im System zum Versenden bereit gestellt werden, so dass die Nachricht von einem zuständigen Mitarbeiter gegebenenfalls noch ergänzt werden kann, beispielsweise um einen Kostenvoranschlag, wenn im Rahmen der Maßnahme eine Reparaturbedürftigkeit der betreffenden Betriebsmitteleinheit festgestellt wurde, oder um eine Rechnung, wenn im Rahmen der Maßnahme abrechnungsfähige Leistungen erbracht wurden.

Sofern mit der Benachrichtigung über einer fehlgeschlagene Instandsetzungsmaßnahme ein Reparaturvorschlag und/oder Kostenvoranschlag an die verantwortliche Stelle übermittelt wird, kann in dem System vorgesehen sein, eine die Freigabe des Reparaturvorschlags und/oder Kostenvoranschlag durch die zuständige Stelle anzunehmen und sodann die in dem Reparaturvorschlag und/oder Kostenvoranschlag aufgeführten Maßnahmen zu veranlassen; genauer gesagt, den Reparaturauftrag auszulösen.

Ein besonderer Vorteil der erfindungsgemäß eingesetzten Vorlagen besteht darin, dass sich über die Vorlagen auch die Wartungszustände von solchen Betriebsmitteleinheiten erfassen lassen, die zur Selbstdiagnose nicht fähig sind. So existieren einerseits "intelligente" Betriebsmittel, die über eine eigene Steuerung verfügen, die den Wartungszustand des Betriebsmittels selbst überwacht. So besitzen beispielsweise neuere Flurförderfahrzeuge Betriebsstundenzähler, die nach Erreichen einer voreingestellten Betriebsstundenzahl selbstständig eine Wartungsaufforderung ausgeben, vergleichbar mit der "Service-Leuchte" in einem Automobil. Die weitaus größere Anzahl der heute verwendeten Betriebsmitteleinheiten ist jedoch "dumm" und verfügt über keine Möglichkeit zur Selbstdiagnose, wie etwa eine Leiter. Das Verfahren wird mithin bevorzugt zur Instandhaltung von Betriebsmitteleinheiten eingesetzt, die zumindest teilweise zur Selbstdiagnose ihres gegenwärtigen Wartungs-, Inspektions- und Prüfzustandes nicht befähigt sind. Gleichwohl kann das System in solchen Betriebsstätten eingesetzt werden, welche sowohl intelligente, als auch dumme Betriebsmitteleinheiten umfassen.

In einer bevorzugten Weiterbildung umfasst das Verfahren einen Kontrollschritt, im Rahmen dessen aus der Datenverarbeitungsanlage eine Übersicht der erledigten und offenen Instandhaltungsmaßnahmen dargestellt wird. Auf diese Weise kann sich der für die Instandhaltung der Betriebsmittel Verantwortliche einen Überblick über die erledigten und noch offenen "to-dos" verschaffen, was ihm die Arbeitsorganisation erleichtert.

Die Darstellung der offenen Instandhaltungsmaßnahmen kann auch kalendarisch erfolgen, sodass die für die Betriebsmittel verantwortliche Stelle eine Übersicht darüber hat, wann Instandhaltungsmaßen an welchen Betriebsmitteln erfolgen, sodass etwaige Ausfallzeiten der Betriebsmittel eingeplant werden können.

In einer bevorzugten Weiterbildung umfasst das Verfahren einen Kontrollschritt, im Rahmen dessen der gegenwärtige Wartungs-, Inspektions- und Prüfzustand der instandgehaltenen Betriebsmitteleinheiten dargestellt wird. Dieser Kontrollschritt ermöglicht es dem Betriebsverantwortlichen sich einen Überblick über den aktuellen Wartungszustand seiner gesamten Anlage zu verschaffen. Auf diese Weise kann er das von seiner Anlage ausgehende Risiko besser einschätzten.

Vorzugsweise erfolgt die Darstellung des gegenwärtigen Wartungs-, Inspektions- und Prüfzustand der instandgehaltenen Betriebsmitteleinheiten anhand eines Farbmusters, dessen Farben den Ergebniscodes der durchgeführten Instandhaltungsmaßnahmen bzw. den anstehenden Instandhaltungsmaßnahmen zugeordnet sind. So kann eine Betriebsmitteleinheit, deren letzte Instandhaltungsmaßnahme mit "OK" abgeschlossen wurde, grün dargestellt werden. Einer Betriebsmitteleinheit für die nach dem in dem System hinterlegten Instandhaltungsplan bereits eine Instandhaltungsmaßnahme ansteht, aber noch nicht durchgeführt wurde, wird gelb markiert. Eine noch nicht angestoßene, oder negativ verlaufende Instandhaltungsmaßnahme wird rot markiert. Auf diese Weise erhält der Anlagenführer eine einfach zugängliche Ampeldarstellung des Wartungszustandes seiner im verantworten Betriebsmitteleinheiten. Darüber hinaus könnten Betriebsmittel, die zum vorgesehenen Zeitpunkt vom Wartungspersonal nicht angetroffen wurden (etwa eine verloren gegangene Leiter), gesondert markiert werden, zum Beispiel schwarz.

Vorzugsweise erfolgt die Darstellung des gegenwärtigen Wartungs-, Inspektions- und Prüfzustand der instandgehaltenen Betriebsmitteleinheiten gruppiert, insbesondere gemäß ihrer Zugehörigkeit zu bestimmten Betriebsmitteln. Das erleichtert die Übersicht. Zudem kann die Darstellung einer Betriebshierarchie entsprechend erfolgen, sodass der Anlagenführer nur den Zustand seiner eigenen Betriebsmittel sieht, währenddessen der Standortleiter jeweils nur den Gesamtzustand der einzelnen Anlagen seines Standorts präsentiert bekommt, ohne von Einzelheiten aus den Anlagen überfrachtet zu werden.

Es macht Sinn, die Datenverarbeitungsanlage mit einer Schnittstelle zu versehen, die es dem für die instandgehaltenen Betriebsmittel verantwortliche Stelle ermöglicht, bereits erfasste Betriebsmitteleinheiten aus der Datenverarbeitungsanlage zu löschen oder bisher nicht erfasste Betriebsmitteleinheiten neu zu erfassen. Somit ist es der verantwortlichen Stelle (Kunde, zuständiger Mitarbeiter) möglich, neu angeschaffte Betriebsmittel selbstständig in das Wartungssystem einzugliedern bzw. ausgemusterte Betriebsmittel aus dem Wartungssystem zu entfernen. Die Schnittstelle sollte den Benutzer bei der Aufnahme neuer Betriebsmittel dadurch unterstützen, dass es ihm Vorlagen vergleichbarer Betriebsmittel anbietet.

Eine Weiterbildung der Erfindung sieht es vor, die Datenverarbeitungsanlage Vorlagen mit zusätzlichen Informationen für das Wartungspersonal bzw. der für das Betriebsmittel verantwortlichen Stelle erzeugt, z.B. eine Leistungsbeschreibung der Wartungsmaßnahme, sodass die Verantwortliche Stelle entscheiden kann, ob die Maßnahme durchzuführen ist oder nicht bzw. mit der Definition von Prüfrandbedingungen und/oder Prüfdetail, welche das Betriebsmittel erfordert, so zum Beispiel eine besondere Qualifikation des Prüfpersonals.

Selbstverständlich sollte die Datenverarbeitungsanlage in einer Weise bereitgestellt werden, dass sie unterschiedlichen Personengruppen unterschiedliche Zugriffsrechte auf die Betriebsmitteldatensätze gestattet. Auf diese Weise wird das "need-to-know-Prinzip" technisch gewährleistet. Dies gilt umso mehr, wenn ein mit der Instandhaltung von Betriebsmitteln unterschiedlicher Anlagenbetreiber betrauter Servicedienstleister das Instandhaltungsverfahren durchführt. So kann verhindert werden, dass der eine Kunde Zugriff auf die Wartungsdaten eines anderen Kunden hat, der seine Anlage von demselben Servicedienstleister instand halten lässt.

Das Wartungspersonal wird in der Regel nicht nur eine einzige Instandhaltungsmaßnahme an einer einzigen Betriebsmitteleinheit durchführen, sondern entweder alle für das betreffende Betriebsmittel anstehenden Maßnahmen oder alle Maßnahmen einer bestimmten Kategorie für eine Gruppe von Betriebsmitteln, wie etwa die elektrische Prüfung aller Pumpen einer Anlage, aller Prüfungen an Equipments/Messstellen eines Apparates, oder die Überprüfung aller Hebezeuge in einer Halle. Deshalb sieht eine Weiterbildung der Erfindung vor, dass mehrere Vorlagen betreffend eine Gruppe von anstehenden Instandhaltungsmaßnahmen erzeugt werden, und dass nach Durchführung der von der Gruppe umfassten Instandhaltungsmaßnahmen die einzelnen Ergebniscodes der Instandhaltungsmaßnahmen gesammelt an die Datenverarbeitungsanlage übertragen werden. Auf diese Weise kann dem Elektriker oder dem Kranprüfer ein auf sein Arbeitsgebiet zugeschnittenes Arbeitspaket in Form eines Vorlagenbündels geschnürt werden, was nach Rückkehr von seinem Rundgang gesammelt eingelesen wird. Dies hilft bei Bündelung von Maßnahmen um, oder an einem Objekt/einer Objektart.

Das hier beschriebene Instandhaltungsverfahren wird zumindest teilweise Computer-implementiert durchgeführt.

Deswegen ebenfalls zur Erfindung gehörig angesehen wird ein Computersystem zur Durchführung des Instandhaltungsverfahrens nebst zugehörigen Computerprogramm bzw. Computerprogrammprodukt, das Programmcodemittel umfasst, die eine Datenverarbeitungsanlage bei ihrer Ausführung auf der Datenverarbeitungsanlage anweisen, das vorstehend beschriebene Verfahren auszuführen.

Gegenstand der Erfindung ist mithin auch ein Computersystem zur Instandhaltung von Betriebsmitteln großtechnischer Anlagen oder Fabrikationsstätten, mit einer Datenverarbeitungsanlage, in welcher eine Vielzahl von einzelnen Betriebsmitteleinheiten umfassenden Betriebsmittel in Betriebsmitteldatensätzen erfasst sind, und aus welcher der gegenwärtige Wartungs-, Inspektions- oder Prüfzustand der erfassten Betriebsmitteleinheiten abrufbar ist, mit einer Ausgabeeinrichtung zur Erzeugung digitaler und/oder nicht-digitaler Vorlagen einschließlich eventuell vorhandener externer Anhänge, mit einer Erfassungseinrichtung zum Einlesen von mit Ergebniscodes gekennzeichneten digitalen Vorlagen und/oder elektronischer Abbilder von mit Ergebniscode gekennzeichneten nicht-digitalen Vorlagen, und mit Übertragungsmitteln zur Weitergabe der über die Erfassungseinrichtung eingelesenen Ergebniscodes an die Datenverarbeitungsanlage, wobei das Computersystem mittels eines Computerprogramms zur Durchführung des erfindungsgemäßen Verfahrens eingerichtet ist.

Die Verwendung eines solchen Computersystems zur Durchführung des erfindungsgemäßen Verfahrens ist ebenfalls Gegenstand der Erfindung.

Gegenstand der Erfindung ist auch ein Computerprogramm, das Instruktionen aufweist, die zur Durchführung eines erfindungsgemäßen Verfahrens eingerichtet sind.

Ein solches Computerprogramm kann verkörpert sein in einem Computerprogrammprodukt, welches ein computerlesbares Medium mit Computerprogramm-Code-Mitteln aufweist. Nach dem Laden des Computerprogramms von dem Medium in einen Computer ist der Computer durch das Programm zur Durchführung eines erfindungsgemäßen Verfahrens eingerichtet.

Das Computerprogramm kann auch implementiert sein in einem Computerprogrammprodukt, welches das Computerprogramm auf einem elektronischen Signal aufweist (Download-Version). Nach dem Laden des Computerprogramms in einen Computer von dem elektronischen Signal ist der Computer durch das Programm zur Durchführung eines erfindungsgemäßen Verfahrens eingerichtet.

## Patentansprüche

1. Verfahren zur Instandhaltung von Betriebsmitteln großtechnischer Anlagen oder Fabrikationsstätten, umfassend die folgenden Schritte:
a) Bereitstellen einer Datenverarbeitungsanlage, in welcher eine Vielzahl von einzelnen Betriebsmitteleinheiten umfassenden Betriebsmittel in Betriebsmitteldatensätzen erfasst sind, und aus welcher der gegenwärtige Wartungs-, Inspektions- oder Prüfzustand der erfassten Betriebsmitteleinheiten abrufbar ist,
b) Erzeugen mindestens einer eine anstehende Instandhaltungsmaßnahme betreffende digitale oder nicht-digitale Vorlage mit einer eine bestimmte Betriebsmitteleinheit eindeutig identifizierenden und von der Datenverarbeitungsanlage automatisiert auswertbaren Betriebsmittelkennung mittels der Datenverarbeitungsanlage,
c) Durchführen der Instandhaltungsmaßnahme an der durch die erzeugte Vorlage identifizierten Betriebsmitteleinheit,
d) Kennzeichnen der Vorlage mit einem das Ergebnis der durchgeführten Instandhaltungsmaßnahme charakterisierenden, von der Datenverarbeitungsanlage automatisiert auswertbaren Ergebniscode,
e) Übertragen der mit dem Ergebniscode gekennzeichneten digitalen Vorlage oder eines elektronischen Abbilds der mit dem Ergebniscode gekennzeichneten nicht-digitalen Vorlage an die Datenverarbeitungsanlage, wobei die Datenverarbeitungsanlage den abrufbaren gegenwärtigen Wartungs-, Inspektions- oder Prüfzustand anhand der Betriebsmittelkennung und dem Ergebniscode für die betroffene Betriebsmitteleinheit automatisiert anpasst.

2. Verfahren nach dem vorhergehenden Anspruch, **dadurch gekennzeichnet, dass** die Datenverarbeitungsanlage die digitale Vorlage oder das elektronische Abbild der nicht-digitalen Vorlage dem der Betriebsmitteleinheit zugehörigen Betriebsmitteldatensatz automatisiert zuordnet und abrufbar auf einem Speicher der Datenverarbeitungsanlage hinterlegt.

3. Verfahren nach Anspruch 2, **dadurch gekennzeichnet, dass** die Datenverarbeitungsanlage die digitale Vorlage oder das elektronische Abbild der nicht-digitalen Vorlage einschließlich eines elektronischen Abbilds eines nicht-digitalen Anhangs externen Ursprungs dem Speicher der Datenverarbeitungsanlage hinterlegt.

4. Verfahren nach Anspruch 2 oder 3, **dadurch gekennzeichnet, dass** die Datenverarbeitungsanlage die digitale Vorlage oder das Abbild der nicht-digitalen Vorlage änderungssicher hinterlegt.

5. Verfahren nach einem der vorhergehenden Ansprüche, **dadurch gekennzeichnet, dass** die Datenverarbeitungsanlage mittels programmtechnischer Mittel für die zu auf dem Speicher zu hinterlegende Vorlage selbsttätig einen Dateinamen vergibt, wobei zumindest ein Teil des Dateinamens auf Basis der Betriebsmittelkennung erstellt wird.

6. Verfahren nach einem der vorhergehenden Ansprüche, **dadurch gekennzeichnet, dass** die Datenverarbeitungsanlage im Anschluss an die Durchführung einer Instandhaltungsmaßnahme an einer Betriebsmitteleinheit, die zu einem negativen Ergebnis geführt hat, mittels programmtechnischer Mittel selbsttätig eine die mit dem Ergebniscode versehenen Vorlage enthaltende Nachricht erzeugt, und diese an eine für die Betriebsmitteleinheit verantwortliche Stelle versendet.

7. Verfahren nach einem der vorhergehenden Ansprüche, **dadurch gekennzeichnet, dass** die Datenverarbeitungsanlage im Anschluss an die Durchführung einer Instandhaltungsmaßnahme an einer Betriebsmitteleinheit, die zu einem negativen Ergebnis geführt hat, eine einen Reparaturvorschlag und/oder Kostenvoranschlag enthaltende Nachricht erzeugt, diese an eine für die Betriebsmitteleinheit verantwortliche Stelle versendet und nach Freigabe des Reparaturvorschlags bzw. Kostenvoranschlags durch die verantwortliche Stelle die für die Instantsetzung der Betriebsmittel erforderlichen Maßnahmen gemäß Reparaturvorschlag und/oder Kostenvoranschlag veranlasst.

8. Verfahren nach einem der vorhergehenden Ansprüche, **dadurch gekennzeichnet, dass** zumindest ein Teil der instandgehaltenen Betriebsmitteleinheiten zur Selbstdiagnose ihres gegenwärtigen Wartungs-, Inspektions- und Prüfzustandes nicht befähigt sind.

9. Verfahren nach einem der vorhergehenden Ansprüche, **dadurch gekennzeichnet, dass** die Datenverarbeitungsanlage selbstständig mit programmtechnischen Mitteln einer eine kalendarische Übersicht der anstehenden Instandhaltungsmaßnahmen erzeugt.

10. Verfahren nach einem der vorhergehenden Ansprüche, **dadurch gekennzeichnet, dass** die Datenverarbeitungsanlage versehen ist mit einer Schnittstelle zum Erfassen bisher nicht erfasster Betriebsmitteleinheiten und/oder zum Löschen bereits erfasster Betriebsmitteleinheiten.

11. Verfahren nach einem der vorhergehenden Ansprüche, **dadurch gekennzeichnet, dass** die die anstehende Instandhaltungsmaßnahme betreffende digitale oder nicht-digitale Vorlage erzeugt wird einschließlich einer Leistungsbeschreibung der Instandhaltungsmaßnahme und/oder der Definition von Prüfrandbedingungen und/oder Prüfdetails der Instandhaltungsmaßnahme.

12. Verfahren nach einem der vorhergehenden Ansprüche, umfassend einen Kontrollschritt, im Rahmen dessen aus der Datenverarbeitungsanlage eine Übersicht der erledigten und offenen Instandhaltungsmaßnahmen dargestellt wird.

13. Verfahren nach einem der vorhergehenden Ansprüche, umfassend einen Kontrollschritt, im Rahmen dessen der gegenwärtige Wartungs-, Inspektions- und Prüfzustand der instandgehaltenen Betriebsmitteleinheiten dargestellt wird.

14. Verfahren nach Anspruch 13, **dadurch gekennzeichnet, dass** die Darstellung des gegenwärtigen Wartungs-, Inspektions- und Prüfzustand der instandgehaltenen Betriebsmitteleinheiten anhand eines Farbmusters erfolgt, dessen Farben den Ergebniscodes der durchgeführten Instandhaltungsmaßnahmen bzw. den anstehenden Instandhaltungsmaßnahmen zugeordnet sind.

15. Verfahren nach Anspruch 13 oder 14, **dadurch gekennzeichnet, dass** Darstellung des gegenwärtigen Wartungs-, Inspektions- und Prüfzustand der instandgehaltenen Betriebsmitteleinheiten gruppiert, insbesondere gemäß ihrer Zugehörigkeit zu bestimmten Betriebsmitteln erfolgt.

16. Verfahren nach einem der vorhergehenden Ansprüche, **dadurch gekennzeichnet, dass** die Datenverarbeitungsanlage in einer Weise bereitgestellt wird, dass sie unterschiedlichen Personengruppen unterschiedliche Zugriffsrechte auf die Betriebsmitteldatensätze gestattet.

17. Verfahren nach einem der vorhergehenden Ansprüche, **dadurch gekennzeichnet, dass** mehrere Vorlagen betreffend eine Gruppe von anstehenden Instandhaltungsmaßnahmen erzeugt wird, und dass nach Durchführung der von der Gruppe umfassten Instandhaltungsmaßnahmen die einzelnen Ergebniscodes der Instandhaltungsmaßnahmen gesammelt an die Datenverarbeitungsanlage übertragen werden.

18. Computersystem zur Instandhaltung von Betriebsmitteln großtechnischer Anlagen oder Fabrikationsstätten, mit einer Datenverarbeitungsanlage, in welcher eine Vielzahl von einzelnen Betriebsmitteleinheiten umfassenden Betriebsmittel in Betriebsmitteldatensätzen erfasst sind, und aus welcher der gegenwärtige Wartungs-, Inspektions- oder Prüfzustand der erfassten Betriebsmitteleinheiten abrufbar ist, mit einer Ausgabeeinrichtung zur Erzeugung digitaler und/oder nicht-digitaler Vorlagen, mit einer Erfassungseinrichtung zum Einlesen von mit Ergebniscodes gekennzeichneten digitalen Vorlagen und/oder elektronischer Abbilder von mit Ergebniscode gekennzeichneten nicht-digitalen Vorlagen, und mit Übertragungsmitteln zur Weitergabe der über die Erfassungseinrichtung eingelesenen Ergebniscodes an die Datenverarbeitungsanlage, **dadurch gekennzeichnet, dass** das Computersystem vermittels eines Computerprogramms zur Durchführung eines Verfahrens nach einem der Ansprüche 1 bis 17 eingerichtet ist.

19. Verwendung eines Computersystems nach Anspruch 18 zur Durchführung eines Verfahrens nach einem der Ansprüche 1 bis 17.

20. Computerprogramm, das Instruktionen aufweist, die zur Durchführung eines Verfahrens nach einem der Ansprüche 1 bis 17 eingerichtet sind.

21. Computerprogrammprodukt, welches ein computerlesbares Medium mit Computerprogramm-Code-Mitteln aufweist, bei dem jeweils nach Laden des Computerprogramms in einen Computer, der Computer durch das Programm zur Durchführung eines Verfahrens nach einem der Ansprüche 1 bis 17 eingerichtet ist.

22. Computerprogrammprodukt, welches ein Computerprogramm auf einem elektronischen Signal aufweist, bei dem jeweils nach Laden des Computerprogramms in einen Computer, der Computer durch das Programm zur Durchführung eines Verfahrens nach einem der Ansprüche 1 bis 17 eingerichtet ist.
